# EUROPEAN PATENT APPLICATION

(11) **EP 3 624 355 A1**
(43) Date of publication of application: **18.03.2020**
(21) Application number: 18194778.9
(22) Date of filing: 17.09.2018
(51) Int. Cl.: H04B 1/3822

(54) **A VEHICLE COMMUNICATION TOOL FOR RETROFITTING A WIRED COMMUNICATION AND A METHOD OF ITS USAGE**

(71) Applicant: KNORR-BREMSE Systeme für Nutzfahrzeuge GmbH, 80809 München (DE)
(72) Inventor: Bence Szemes, Gábor, 7100 Szekszárd (HU); Kónya, Tamás, 7030 Paks (HU); Németh, Huba, 1116 Budapest (HU); Fuchs, Alexander, 81677 München (DE)
(74) Representative: LifeTech IP Spies & Behrndt Patentanwälte PartG mbB

(57) **Abstract**

A vehicle communication tool (2) for retrofitting a wired communication (15) of an existing electronic control unit (1) for a wireless communication (25) is disclosed. The communication tool comprises: a wireless communication module (7); at least one physical connector (5); and a processing unit (6) arranged between the wireless communication module (7) and the at least one physical connector (5) to convert transmission signals between wired transmission (15) via the at least one physical connector (5) and wireless transmission via the wireless communication module (7).

## Description

The present invention relates to an apparatus and a method for retrofitting an existing wired communication of an existing electronic control unit of a vehicle and, in particular, to a wireless cable replacement in vehicles, particularly in commercial vehicles.

A replacement of a wired communication system within a vehicle by a wireless system would require an enormous effort which is only in rare situations adequate. For example, major modifications at the vehicle architecture has to be performed when replacing all components of a wired communication by a wireless solution. On the other hand, having a wireless communication design allows in a vehicle much more freedom for redesigning future applications such as sensor designs within the vehicle.

Wireless data acquisition systems are, for example, disclosed in US 2018/072113, US 2017/307036 and in WO 2016/161474 A1. These conventional systems, however, rely on a predesigned wireless communication and are not suitable for existing wired communication systems within commercial vehicles.

Therefore, there is a demand for retrofitting legacy systems, in particular of control units, for a wireless communication to significantly reduce the development investments.

Embodiments of present invention relate to a vehicle communication tool for retrofitting a wired communication of an existing (legacy) electronic control unit for a wireless communication. The vehicle communication tool comprises a wireless communication module, at least one physical connector, and a processing unit. The processing unit is arranged between the wireless communication module and the at least one physical connector to convert transmission signals between wired transmission through the at least one physical connector and wireless transmission through the wireless communication module.

Embodiments of the present invention shall not be limited to particular control unit in the vehicle (or in a trailer). In addition, embodiments can also be applied to sensors/actuator or any other end nodes that communicates so far by a wired communication.

Optionally, the at least one physical connector is adapted to forward analog and/or digital transmission signals to the processing unit or, the other way around, to the existing electronic control unit.

Optionally, the processing unit is configured to provide a conversion of transmission signals in accordance with at least one of the following standards:
- Bluetooth standard,
- 802.15.4 standard,
- 802.11 standard,
- a protocol utilizing a frequency band of 433 MHz.

Optionally, the physical connector is adapted to be connected via a cable and/or a plug to the existing electronic control unit installed on the vehicle.

Further embodiments relate to an electronic vehicle control unit with a connector interface and an apparatus as described before. The physical connector is connectable to the connector interface to exchange the transmission signals.

Optionally, the electronic vehicle control unit further comprises a processing unit configured to provide the transmission signals to a plurality of sensors and to send the transmission signals through the connector interface to the apparatus for wireless transmission to the plurality of sensors.

Another embodiment relates to a system with a legacy electronic control unit and at least one end node, wherein the system includes a first apparatus as described before to convert wired communication signals of the legacy electronic control unit, and a second apparatus as described before to convert wired communication signals of the at least one end node to wireless communication signals.

Optionally, the electronic control unit is a vehicle (or trailer) control unit and the at least one end node includes at least one of the following: a sensor, an actuator, a door opener, a component of an electronic vehicle brake system such as a pressure modulator.

Yet another embodiment relates to a vehicle, in particular a commercial vehicle, with a system or an apparatus as described before.

Further embodiments relate to a method of using a retrofitted legacy electronic control unit (or an end node) for a wireless communication. The method includes:
- receiving a wired transmission signal from the legacy electronic control unit (or an end node) by at least one physical connector;
- converting the wired transmission signal into a wireless transmission signal; and
- transmitting the wireless transmission signal by a wireless communication module.

This method or part thereof may also be a computer-implemented method. A person of skill in the art would readily recognize that steps of the described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Therefore, embodiments of the present invention allow to retrofit a wire-bound communication in exemplary commercial vehicles by a wireless communication system that provides a wireless communication interface to control units such as sensors or actuators that were designed for wired communication.

Some examples of the systems and/or methods will be described in the following by way of examples only, and with respect to the accompanying figures, in which:
- Fig. 1: depicts a vehicle communication tool according to an embodiment of the present invention;
- Fig. 2: depicts a vehicle communication system according to another embodiment.

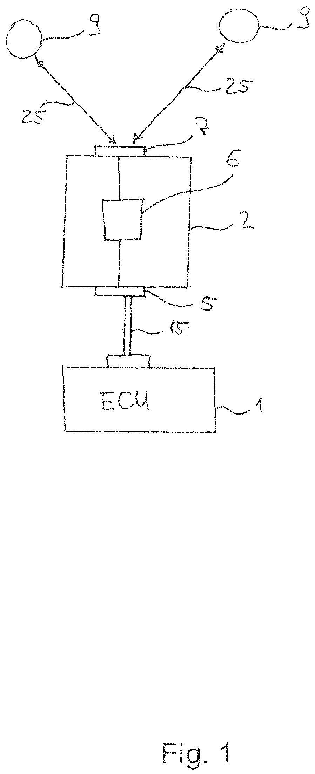

**Fig. 1** depicts a vehicle communication tool 2 between a legacy control unit 1 and one or more end nodes 9 according to an embodiment. The communication tool is suitable for retrofitting a wired communication 15 of an existing electronic control unit 1 or any other end node (such as sensors or actuators) for a wireless communication 25. The tool comprises a wireless communication module 7, at least one physical connector 5, and a processing unit 6. The processing unit 6 is arranged between the wireless communication module 7 and the at least one physical connector 5 to convert transmission signals between wired transmission 15 via the at least one physical connector 5 and wireless transmission 25 via the wireless communication module 7. The communication tool 2 according to embodiments is thus a wireless cable replacement tool that is connectable to a legacy control unit 1.

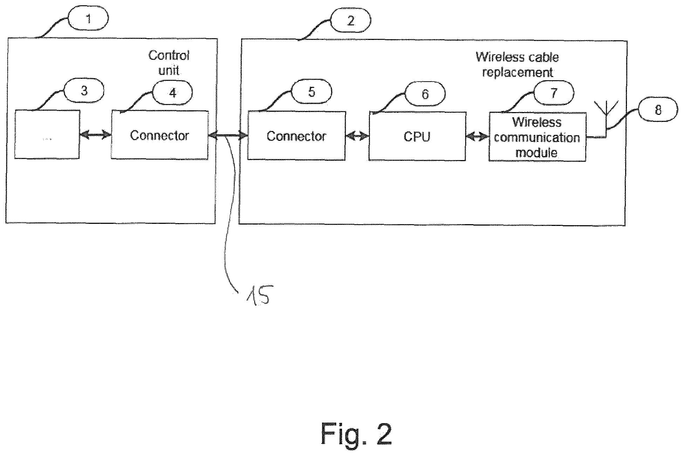

**Fig. 2** depicts a vehicle communication system according to another embodiment The depicted tool 2 further comprises an optional antenna 8 adapted to transmit the signals between the control unit 1 and other components within the vehicle. The processing unit 6 converts the wired data received from the physical connector 5 to wireless data or to data which are suitable for transmission by a wireless protocol. It is understood that the conversion may not relate to the conveyed information itself, but rather to transport standard (i.e. the transmission protocol) that differ for wired communication 15 and wireless communication 25.

The existing electronic control unit 1 may comprise a connection interface 4 which communicates with the connector 5. This connection interface 4 needs not to be modified for the wireless communication 25. Therefore, the connection between the electronic control unit 1 (or any other end node) and the communication tool 2 may include a plug or cable connection to connect the communication tool 2 to the electronic control unit 1.

A particular advantage of embodiments relates to the possibility that the electronic control unit 1 can operate in the same way as for the wired communication 15 and transmits the respective same signals to the connector interface 4 as for a wired transmission 15. These signals are received by the connector 5 and translated into wireless communication data.

Embodiments are not restricted to particular signals. The transmitted signal(s) may be analog signals, but also digital signals. In addition, the communication may be one-directional, i.e. only from the control unit 1 to an end node or the other way around (e.g. for receiving only sensor signals from a sensor as an exemplary end node). The communication may also be 2-directional (simplex or duplex). The control unit 1 may communicate, for example, with another control unit in the vehicle to exchange data back and forth.

Therefore, embodiments enable a retrofitting of existing or legacy electronic control units 1 without making any modification to the existing electronic control unit and without being limited on particular control units. The electronic control unit 1 may be any electronic control unit within a vehicle. It may, for example, be related to a control unit for a pressure modulator providing respective signals to the wheels of the vehicle which used be connected by respective wires. Other applications involve sensors or any kind of actuators (e.g. door opener).

Advantages of embodiments refer in particular to saving costs while providing a high degree of flexibility of future modifications. For example, existing cable bound communications involve significant costs and are not reliable. If a cable is broken the complete communication fails and it is often very difficult to find the particular location where the cable is broken. In contrast hereto, by providing a retrofitting for existing wire-based communication the reliability can be increased significantly. Finally, embodiments are applicable to almost any legacy electronic control unit within the vehicle - not only to electronic braking systems.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 1: electronic control unit
- 2: vehicle communication tool
- 3, 6: processing units
- 4: connector interface
- 5: physical connector(s)
- 7: wireless communication module
- 8: antenna
- 9: end nodes
- 15: wired communication
- 25: wireless communication

## Claims

1. A vehicle communication tool (2) for retrofitting a wired communication (15) of an existing electronic control unit (1) for a wireless communication (25),
**characterized by:**
- a wireless communication module (7);
- at least one physical connector (5); and
- a processing unit (6) arranged between the wireless communication module (7) and the at least one physical connector (5) to convert transmission signals between wired transmission (15) via the at least one physical connector (5) and wireless transmission (25) via the wireless communication module (7).

2. The vehicle communication tool (2) of claim 1,
**characterized in that**
the at least one physical connector (5) is adapted to forward analog or digital transmission signals to the processing unit (6) or to the existing electronic control unit (1).

3. The vehicle communication tool (2) according to claim 1 or claim 2,
**characterized in that**
the processing unit (6) is configured to provide a conversion of transmission signals in accordance to at least one of the following standards:
- Bluetooth standard,
- 802.15.4 standard,
- 802.11 standard,
- a protocol utilizing a frequency band of 433 MHz.

4. The vehicle communication tool (2) according to one of the preceding claims,
**characterized in that**
the physical connector (5) is adapted to be connected via a cable and/or a plug to the existing electronic control unit (1) installed on the vehicle.

5. An electronic vehicle control unit with a connector interface (4),
**characterized by**
an apparatus (2) according to one of the preceding claims,
wherein the physical connector (5) is connectable to the connector interface (4) to exchange the transmission signals.

6. The electronic vehicle control unit of claim 5,
**characterized by**
a processing unit (3) configured to provide the transmission signals to a plurality of sensors and to send the transmission signals via the connector interface (4) to the apparatus (2) for wireless transmission to the plurality of sensors.

7. A system with a legacy electronic control unit (1) and at least one end node (9),
**characterized by**
a first apparatus according to one of claims 1 to 4 configured to convert wired communication signals of the legacy electronic control unit (1); and
a second apparatus according to one of claims 1 to 4 configured to convert wired communication signals of the at least one end node (9).

8. The system of claim 7,
**characterized in that**
the at least one end node (9) includes at least one of the following:
a sensor,
an actuator,
a door opener,
a component of an electronic vehicle brake system such as a pressure modulator.

9. A vehicle with a system according to claim 7 or claim 8.

10. A method of using a retrofitted legacy electronic control unit (1) for a wireless communication,
**characterized by:**
- receiving a wired transmission signal from the legacy electronic control unit (1) by at least one physical connector (5);
- converting the wired transmission signal into a wireless transmission signal; and
- transmitting the wireless transmission signal by a wireless communication module (7).

11. A computer program product with a non-volatile memory to store software code configured to cause a processing unit or a control unit, when installed thereon, to carry out the method of claim 10.
